# EUROPEAN PATENT APPLICATION

(11) **EP 1 486 472 A1**
(43) Date of publication of application: **15.12.2004**
(21) Application number: 02779588.9
(22) Date of filing: 15.10.2002
(51) Int. Cl.: C04B 35/447

(54) **CERAMIC PASTES HAVING A NON-STANDARD FORMULATION WITH A PHOSPHOROUS CONTENT GREATER THAN 2 % BY WEIGHT, THE PREPARATION METHOD THEREOF AND THE ADVANTAGES OF SAME**

(30) Priority: 16.01.2002 ES 200200081
(71) Applicant: Neos Cer Mica E Investigaci N, S.L., 03502 Benidorm Alicante (ES)
(72) Inventor: OZCARIZ FERNANDEZ, Fernando, Emilio, Segovia (ES)
(74) Representative: Primo de Rivera y Urquijo, Jose Antonio
(86) International application number: PCT/ES2002/000488
(87) International publication number: WO 2003/059840

(57) **Abstract**

Unconventional-formula ceramic pastes with a phosphorus content of over 2% in weight. Method of production and the advantages it provides.

The purpose of the invention is the preparation of unconventional-formula ceramic pastes by the use of phosphorus compound plasticizers and flux. These phosphorus compounds are mixed with mainly degreasing materials, reducing their fusion temperature and providing them with the plasticity required for the forming of the ceramic piece. This formulation makes it possible to improve the physical-chemical properties of the pastes: water absorption, whiteness, etc. Similarly, it optimises the kilning cycles, obtaining satisfactory sinterisation levels at lower temperatures and kilning times (porcelain-like stoneware at 110° C). Consequently, the formulation of these unconventional pastes with the improvements introduced in the product and in the manufacturing process is hereby claimed.

## Description

Ceramic pastes with an unconventional formula with a phosphorus content of over 2% in weight. Method of production and the advantages it provides.

### Technical sector:

The technical sectors in which the invention is included are: the ceramics industry and the chemical industry for ceramic enamels and frits, but it can also be applied to any other field requiring a similar level of performance.

The purpose of this patent is to introduce a new formula for ceramic pastes, with the incorporation of phosphorus compounds which act as flux and plasticizers in the composition of said pastes in order to improve traditional ceramic manufacturing processes and products.

### State of the art

Over the centuries, traditional ceramics has used plastic raw material to make the forming of its products easier. These plastic raw materials are characterised by a composition of mainly clayey minerals (illite, chlorite, kaolinite, etc.). The characteristics and compositions of these minerals vary in accord with the area. However, they all have small-size particles and plastic properties.

Plasticity is defined as the bonding force between particles, which provides sufficient mechanical resistance so that, once the forming operation of the ceramic piece has ended, it does not lose the shape it has been given.

Over time, conventional ceramic pastes made with clays have incorporated degreasing raw materials (raw materials with low plasticity) to vary the physical-chemical properties of the pastes and obtain the desired ceramic result. This method affects properties such as: water absorption, linear contraction, coefficient of expansion, flux, whiteness of the piece, etc.

The introduction of degreasing substances into the composition is basically carried out by incorporating the following into the clays: quartz, feldspar, carbonates, organic matter, colouring oxides, soluble salts (sulphates and chlorides) and, in recent years, variable percentages of ceramic frits are being added to the paste in order to reduce the vitrification temperature of the piece and improve its aesthetic specifications.

At this point, we need to define bone china ceramics. This type of ceramics is a special type of low-temperature porcelain where the phosphorus in the ashes of incinerated bones acts as a dissolvent to reduce viscosity in the melting of the paste. The composition of this type of paste is:
- Plastic material 25-55 % in weight.
- Quartz 20-30 % in weight.
- Ashes 40-50 % in weight.

These percentages do not include the water used for the preparation or forming of the ceramic paste.

Due to the difficulties in production, the volume of the material manufactured in this type of porcelain is low if we compare it with other types of traditional ceramics.

During the evolution of traditional ceramics, more and more sophisticated paste preparation and piece forming processes have been developed: from the potter's wheel to the more technical processes of casting, extrusion and pressing. The paste preparation processes range from the simplest of techniques such as manual kneading by the potter to more advanced techniques such as the following: the process of dissolving clays in water for casting processes, the dry milling of clays and later humidification in the extrusion or pressing, damp milling and later drying by atomisation of barbotine.

However, throughout the evolution of traditional ceramics, there is one common denominator: the use of clays or other plastic materials (kaolinite, etc.) as an ideal product for the forming of the ceramic piece. Besides the plasticity required for modelling the ceramic piece, these plastic raw materials also have other properties which enable their use:
- There are large resources of clays all over the world.
- It is cheap.
- They are not harmful to health.
- Their flux is adequate for kilning cycles that are not too high, where the desired vitrification and mechanical resistance levels are obtained.

These are some of the reasons that have turned the plastic raw materials, mainly clays or kaolins, into the base product for the traditional ceramics industry. Traditional ceramics includes: china, pottery, slates, bricks, ceramic tiles, porcelain, etc.

A ceramic paste composition with a conventional formula is
- Plastic material 20-100% in weight.
- Degreasing material 0-80% in weight.
- Deflocculant 0-1% in weight.

These percentages do not include the water used for the preparation or forming of the ceramic paste.

Deflocculants are inorganic compounds that are added to the ceramic paste mix by humidification. These additives are used to adapt the rheological properties of the ceramic pastes in order to reduce their viscosity and thixotropy. This enables the processes for preparing the barbotine (ceramic pastes in suspension with water), such as the dissolution or milling of the barbotine and, as far as possible, the reduction of the amount of water required for preparing the barbotines. This means savings in costs and greater productivity during the drying of the barbotine due to the increase in the solid content.

The deflocculants most used in the ceramics sector are: sodium or barium carbonate, sodium silicate, phosphorus compound (sodium tripolyphosphate and sodium hexametaphosphate) and sodium polyacrylates.

The percentage of deflocculant added to the ceramic pastes with a conventional formula is low, usually lower than 1% the total solids, for various reasons:
- The cost of deflocculants is high and consequently, optimisation of the percentage of deflocculant reduces costs.
- Excessive addition of deflocculants to ceramic pastes produces saturation of said additives, resulting in a so-called over-deflocculation effect, causing a sharp increase in the viscosity of the barbotines. This makes preparing the pastes more difficult.

Once the conventional ceramic pastes have been prepared, the ceramic piece is formed using the aforementioned processes, such as: kneading, casting, extrusion or pressing. Although others exist, these are the most common.

The resulting ceramic piece is then subjected to a variety of drying, decoration and kilning processes. These processes are not always carried out in the same order, but rather vary in accord with the desired final result. However, the piece achieves the desired final resistance in the kilning process, where the ceramic paste is partially or completely fused.

To conclude, we shall give a more detailed description of the uses of phosphorus in the technological development of the human race. The consumption of phosphorus compounds is possible thanks to the existence in the world of large rock reserves with high phosphorus content. The compounds we shall use in the development of this patent are prepared on the basis of said rocks.

Some examples of these applications are:

| - Final product | - Ingredient |
|---|---|
| Anti-freeze | Dipotassium phosphate |
| Sports drinks | Monopotassium phosphate |
| Washing-machine detergents | Sodium tripolyphosphate |
| Chicken breeding | Sodium tripolyphosphate |
| Products for bakeries | Monocalcium phosphate and sodium pyrophosphate |
| Bath salts | Sodium hexametaphosphate |
| Cola drinks | Phosphoric acid |
| Boiled ham | Sodium tripolyphosphate |
| Frozen fish | Sodium tripolyphosphate or sodium hexametaphosphate |
| Gelatins | Tricalcium phosphate |
| Fire extinguishers | Monoammonium phosphate and diammonium phosphate |
| Fertilisers | Monoammonium phosphate and diammonium phosphate |

From the above, we can deduce that phosphorus compounds are more widely used as additives in products for foodstuffs, fertilisers, fireproof materials and deflocculants.

### Description of the invention

The purpose of the invention is to reduce the kilning cycles of current ceramic pastes or, where possible, achieve an almost complete vitrification of the ceramic piece at a temperature below present levels. For this, phosphorus compounds have been used.

At present in the ceramics sector, phosphorus compounds are generally used as deflocculants for ceramic pastes and enamels, or as opaquing or matting agents in the production of ceramic frits. However, they are not used as flux or plasticizers in ceramic pastes.

There is great difficulty involved in forming ceramic pieces by means of degreasing raw materials. As no bonding force is created between particles, after the ceramic piece has been formed, its mechanical resistance is very low, which makes it difficult to remove it from a mould without damage. To avoid this fault, phosphorus compounds have been introduced to provide the plasticity required for the forming of the piece.

### Realisation

Monoammonium phosphate is a solid compound that is widely used in fertilisers and as a fire-resistant material. In principle, this compound would not be appropriate as a plasticizer and solvent in ceramic paste, but if it is dissolved in water (approximately 40 g of solid in 100 ml of water), the resulting solution mixed with a degreasing raw material provides the latter with the flux and plasticity required for the forming of the piece. Monoammonium phosphate is not easily dissolved in water, but when carbonates are present it reacts with them and results in a compound which, once dry, is very reactive and plastic.

This monoammonium phosphate solution in water is mixed with a degreasing material for several reasons:
- If we used a plastic raw material, the viscosity of the barbotine would be so high that it would hinder the mixing stages of the ceramic paste and their forming. This is due to the pH level of the phosphorus compound solution. Usually, to make this solution, we use monoammonium phosphate and/or phosphoric acid due to its low cost. This gives us an acidic pH level in the barbotine, which acts as a flocculant for the plastic raw materials, such as clay or kaolins.
- The possibility of using a degreasing compound, usually with a vey low calcination loss, enables the reduction of current kilning cycles. The current kilning cycles for ceramic pieces must enable the degasification produced during the kilning of the plastic raw materials. These have an amount of interstitial water, organic matter and carbonates that degasify at high temperatures (approximately up to 1000° C). Therefore, the reduction of losses by calcination of the ceramic pastes can lead to a reduction in kilning times.

To make these ceramic pastes by means of unconventional-formula ceramic pastes, such as that described above, the correct degreasing material must be used. The degreasing materials available are generally based on silica and alumina and have a high fusion temperature. The invention consists of incorporating phosphorus compounds, mainly in solution form, during the preparation of the barbotine to reduce the sintering temperature of said unconventional-formula ceramic pastes. However, not all the degreasing raw materials have the same flux. Consequently, the amount of phosphorus will vary depending on the degreasing raw material used.

The incorporation of feldspar is appropriate for several reasons:
- It has a low or zero calcination loss
- It is not a highly refractory material
- It has a low cost, which makes this unconventional formula competitive.

An unconventional ceramic paste was formulated by a combination of feldspar and a solution of monoammonium phosphate. Then, the composition was damp milled to a separation of approximately 1% on a 25-micron sieve. The piece was then press-formed and kilned in a cycle of porous mono-kilning (1100° C for 45 minutes), which resulted in a ceramic piece characterised by a very white base with no water absorption.

Nowadays, a large volume of the ceramics on the market does not require the application of varnish or final enamel. However, in the decoration of this ceramic paste with an unconventional formula by means of the use of modem frits and enamels, the expansion coefficient of this paste is not completely appropriate. Feldspars and phosphorus have high expansion coefficients. For this reason, the expansion coefficient of this type of medium is higher than current levels. This would impede the use of enamels and ceramic frits on the current market, since they could lead to planarity problems in the ceramic piece and the crazing of the enamel. Consequently, when the ceramic medium made with these unconventional-formula pastes is to be decorated, we must incorporate natural or manufactured materials that act as correctors of the expansion coefficient. The introduction of these materials makes it possible for the technician to adapt the expansion coefficient of these unconventional-formula pastes to the expansion coefficient of the enamels and frits that are currently on the market. Some examples of the materials available in the ceramic sector are: zirconium silicate, low expansion coefficient corrective ceramic frits, molochite, etc.

The formula of these unconventional-formula ceramic pastes for traditional ceramic pieces is as follows:
- Phosphorus compounds 2-100% in weight.
- Degreasing materials or materials with low plasticity 0-98% in weight.

These percentages do not include the water used for the preparation or forming of the ceramic paste.

A chemical analysis of this type of unconventional-formula ceramic pastes would be:

| Oxide | (%) Weight |
|---|---|
| Na₂O | 4.70 |
| K₂O | 1.16 |
| MgO | 0.02 |
| CaO | 3.00 |
| TiO₂ | 0.05 |
| SiO₂ | 53.70 |
| Fe₂O₃ | 0.27 |
| Al₂O₃ | 11.00 |
| P₂O₅ | 26.10 |

After the barbotine preparation has been made with this type of unconventional pastes, the following stages of the productive system of the ceramic pieces are implemented.

The system for manufacturing ceramic pieces with unconventional-formula pastes makes it possible to develop white, non-porous media with expansion coefficients that are appropriate for current enamels. Consequently, for certain types of support, such as porcelain stoneware, the use of engobe is not necessary. Engobe is a barbotine that is applied between the medium and the final enamel or varnish to hide the imperfections on the ceramic medium (high water absorption, the reddish colour of certain clays, inappropriate expansion coefficient, etc.).

Another advantage is the reduction of the quality of the water required for the barbotine mix. In conventional-formula pastes, the amount of electrolytes inserted in the water for the barbotine mix is limited. The increase in salts in the water or the variation of the pH, usually towards acidic pH levels, causes problems in the flocculation of these barbotines. For this reason, their presence is limited or their reduction often implies lower costs as the amount of deflocculant required to adapt the rheological status of the barbotine is reduced. Unconventional-formula ceramic pastes, based on degreasing materials and phosphorus compounds accept higher quantities of electrolytes in the water or greater variations of the pH level. This opens up new possibilities in the use of sea water or water from purification systems, such as inverse osmosis, for the preparation of ceramic pastes.
The main advantage of this type of unconventional pastes lies in the flux and plasticity provided by the phosphorus compounds. With this type of paste, we can obtain near-zero vitrification levels at lower kilning temperatures. Current cycles for the manufacture of porcelain stoneware, even with the incorporation of vitro-ceramic components to reduce the vitrification temperature, vary between 1180 and 1250° C. Lower temperatures are not usual except for excessively long kilning cycles (over one hour). With this type of unconventional-formula ceramic pastes, near-zero vitrification is achieved at temperatures near to 1100° C and kilning times of between 30 and 60 minutes. This implies a reduction in manufacturing costs due to the reduction in the consumption of gas, and offers many companies the possibility of manufacturing ceramic pieces with lower porosity without modifying their production systems.

The use of this type of unconventional-formula paste makes it possible to reduce the kilning time of the ceramic piece. The fast degasification of this type of ceramic paste can speed up kilning cycles, reducing kilning times in the 200-1000° C interval, which are currently used to decompose and frit the carbonates and the organic matter, which provide the plastic raw materials from mineral plastics.

At the same time, the use of phosphorus compounds as a flux in ceramic pastes enables the reduction of rejections from breakages occurring in the stages between the forming and the kilning of the ceramic piece. These phosphorus compounds begin to melt at a low temperature of approximately between 100 and 200° C. In the companies where, after forming, the ceramic piece is subjected to a forming process, there is an increase in the mechanical resistance by partial fusion of the phosphorus compounds, which impedes the breakage of the pieces during stages after the production system.

In the composition of these unconventional-formula pastes, products from recycling or waste treatment plants, whose elimination may be hazardous or costly, can be introduced. One example is the incorporation of glass from the screens of computer monitors or TV s.

The presentation of this patent not only opens up the possibility of developing ceramic pieces with good technical specifications by using these unconventional-formula pastes, but also, by their incorporation into conventional pastes, they improve the properties of the latter, for example: reducing the water absorption of the ceramic pieces or correcting, where necessary, the expansion coefficient of the conventional-formula ceramic pastes.

The resulting formula of the mixture of unconventional-formula pastes with plastic materials or other types of conventional pastes is as follows:
- Phosphorus compounds 2-100 % in weight.
- Degreasing materials 0-98 % in weight.
- Plastic raw materials 0-98 % in weight.

These percentages do not include the water used for the preparation or forming of the ceramic paste.

### Preamble

Ceramic pastes with non-standard formulation with phosphorus contents exceeding 2% by weight. A process for its production and advantages it introduces.

This non-standard formulation involves the use of phosphorous compounds as a flux or plasticizer. These compounds are mixed with mainly degreasing materials, decreasing their melting point and granting them the plasticity necessary for the forming of the ceramic piece.

This formulation allows for improving the physicochemical properties of the pastes: water absorption, whiteness, mechanical strength of the raw and dry ceramic piece, etc. Likewise, it optimizes the firing cycles, satisfactory degrees of sintering being obtained at lower temperatures and shorter firing times.
Characterizing Part

## Claims

1. Ceramic pastes **characterized in that** they comprise greater amounts of phosphorous compounds than the current ones. Within these phosphorous compounds, the applications of these compounds used in the traditional ceramic industry up to date are not included. These applications are:
- Addition of ashes from the calcination of bones, as the sole supply of phosphorous content, to manufacture phosphate ceramic.
- Addition of phosphorous compounds, which act as deflocculants, for the purpose of decreasing the viscosity of ceramic pastes or ceramic glazes. Those most used for this purpose are: sodium tripolyphosphate and sodium hexametaphosphate. Their percentage ranges in the interval of 0-2% in solids.
- Addition of phosphorous compounds in the composition of ceramic frits.

2. Ceramic pastes according to claim 1, **characterized in that** they have the following chemical composition:
- Phosphorous compounds 2-100% by weight
- Degreasing or low-plasticity materials 0-98% by weight
These percentages do not include the water used for preparing or forming the ceramic paste.

3. Ceramic pastes according to claims 1 to 2,
**characterized in that** their composition allows a percentage of plastic material or another type of standard paste. The resulting formulation is:
- Phosphorous compounds 2-100% by weight.
- Degreasing materials 0-98% by weight.
- Plastic raw materials 0-98% by weight.
These percentages do not include the water used for preparing or forming the ceramic paste.

4. Non-standard ceramic pastes according to claims 1 to 3, **characterized in that** degreasing and plastic materials may have their origin in the direct extraction from natural resources, or may be a product produced by means of industrial processes.

5. Non-standard ceramic pastes according to claims 1 to 4, **characterized in that** their composition allows for recovering recycling or waste products.

6. Non-standard ceramic pastes according to claims 1 to 5, **characterized in that** in their preparation, in addition to being able to use waters with the current features, it allows for incorporating waters with lower qualities than the current ones, such as: seawaters, or waters with high salt contents, waters from any type of purification (both those purified and those purged from the system) or waters from industrial processes.

7. Ceramic pastes according to claims 1 to 6, **characterized in that** said non-standard ceramic paste is suitable for manufacturing traditional ceramics. Therefore, this non-standard ceramic paste is suitable for manufacturing: partially or completely vitrified floor tiles, both glazed and unglazed. This non-standard ceramic paste is also suitable for manufacturing all type of traditional ceramics, such as: bricks, tiles, china, bathroom fittings, porcelain, earthenware or porcelain stoneware (both glazed and unglazed), ceramic for electric insulators or ceramic products the purpose of which is to make toxic or hazard elements in its composition inert, for the environment or persons.

8. A process for obtaining a ceramic paste according to claims 1 to 6, **characterized in that** it comprises the steps of:
- Preparing the solution of the phosphorous compounds in waters (if it is necessary).
- Grinding, mixing or dissolving the degreasing and plastic raw materials in the solution of the phosphorous compounds in water. However, the addition of the phosphorous compounds may also be prior or subsequent to the grinding, mixing or dissolving of the degreasing and plastic raw materials.

9. A process according to claim 8, **characterized in that** these non-standard ceramic pastes of claims 1 to 6 can be mixed with standard ceramic pastes during barbotine preparation or drying, or when the products in form of ceramic powder are prepared to be used.

10. A ceramic product **characterized in that** it is obtained from the ceramic pastes of claims 1 to 6 by means of a process comprising the steps of forming said ceramic paste into the desired shape and firing it. It is **characterized by** its low water absorption, lower than 0.5% according to ISO standard 10545-3, achieved with firing cycles close to 1100ºC and times of less than 45 minutes.

11. A ceramic product **characterized in that** it is obtained from the ceramic pastes of claims 1 to 6 by means of a process comprising the steps of forming said ceramic paste into the desired shape and firing it to obtain a ceramic piece with a degree of sintering equal to or exceeding the current one, reducing the firing times to periods of less than those used today.

12. A ceramic product **characterized in that** it is obtained from the ceramic pastes of claims 1 to 6 by means of a process comprising the steps of forming and drying said ceramic paste into the desired shape, to obtain a crude and dry ceramic piece with a mechanical strength exceeding those obtained in standard ceramic pastes and the same forming system.

13. A half-finished ceramic product **characterized in that** it is obtained from the ceramic paste of claims 1 to 6 by means of a process comprising the steps of forming and drying said ceramic paste. This half-finished product is suitable for being incorporated to other ceramic powders in the forming of the ceramic piece.
Once formed and dry, this half-finished ceramic product can have any shape. However, currently they have the shape of granules or sheets.

## Amended claims

### Amended claims under Art. 19.1 PCT

1. A ceramic paste formulated with a percentage of phosphorus compounds of over 2%, **characterised by** the following composition by weight:
a) Between 2 and 80% of phosphorous compounds.
b) Between 20 and 98% of degreasing materials.
c) Between 0 and 80% water.

2. A ceramic paste according to claim 1 **characterised by** the fact that said phosphorus compounds are essentially a salt or combination of different salts consisting of ammonium phosphates or ammonium hydrogen-phosphates, Phosphates or hydrogen-phosphates of monovalent elements, or a mixture of different ammonium phosphates and hydrogen-phosphates and monovalent elements.

3. A ceramic paste in accord with claims 1 and 2 **characterised by** the fact that besides the aforementioned phosphorus compounds, the formula can include phosphates or hydrogen-phosphates of divalent elements or elements with multiple valences including the +2 valence, phosphates or hydrogen-phosphates of trivalent elements or elements with multiple valences including the +3 valence, and phosphates or hydrogen-phosphates of tetravalent elements or elements with multiple valences including the +4 valence.

4. A ceramic paste in accord with claim 1, **characterised by** the fact that the degreasing materials are natural or synthetic raw materials essential for making the ceramic paste. The combination of one or more degreasing materials have the following chemical composition by weight, where the percentages correspond to the total number of oxides supplied to said partially or completely sinterised ceramic paste by the combination of degreasing materials:
a) between 0 and 50% of an oxide of a monovalent element responding to the general formula [1]: Me(I)₂O [1] where Me(I) is a monovalent element or a mixture of different oxides of monovalent elements that respond to said general formula [1],
a) between 0 and 70% of an oxide of a divalent element responding to the general formula [2]: Me(II)O [2] where Me(II) is a divalent element or an element with multiple valences including the +2 valence, or a mixture of different oxides of divalent elements that respond to the general formula [2],
c) between 0 and 100% of an oxide of a trivalent element of the general formula [3]: Me(III)₂O₃ [3] where Me(III) is a trivalent element or an element with multiple valences including the +3 valence, or a mixture of different oxides of trivalent elements that respond to the general formula [3], and
d) between 0 and 100% of an oxide of a tetravalent element of the general formula [4]: Me(IV)O₂ [4] where Me(IV) is a tetravalent element or an element with multiple valences including the +4 valence, or a mixture of different oxides of tetravalent elements that respond to the general formula [4]; where the percentages correspond to the total number of oxides supplied to said partially or completely sinterised ceramic paste by the combination of degreasing materials.

5. A ceramic paste in accord with claim 1, **characterised by** the fact that the degreasing materials can be partially replaced by plastic materials from clayey minerals, organic plasticizers or a mixture of both. This partial substitution of the degreasing materials shall be composed of a percentage of between 0.1 and 30% of the total composition in weight of the ceramic paste.

6. A ceramic paste in accord with claim 1, **characterised by** the fact that said ceramic paste is appropriate for the manufacture of traditional ceramics; a ceramic paste appropriate for the manufacture of partially or completely vitrified ceramic tiles, enamelled and non-enamelled; a ceramic paste appropriate for the manufacture of bricks, slates, sanitary fittings, china, porcelain, stoneware and porcelain-like material; a ceramic paste appropriate for inerting toxic or hazardous elements in its composition; and a ceramic paste appropriate for the manufacture of ceramics for electrical insulation.

7. A procedure for obtaining a ceramic paste in accord with any of claims 1 to 6, **characterised by** the fact that it comprises the stages of:
a) Preparation of the dissolution of the phosphorus compounds in water.
b) Grinding, kneading or dissolving the degreasing materials using the dissolution of the phosphorus compounds in water.
